Europäisches Patentamt

European Patent Office

Office européen des brevets

(11) Publication number : **0 512 838 A1**

## (12) EUROPEAN PATENT APPLICATION

(21) Application number : 92304130.5

(22) Date of filing : 08.05.92

(51) Int. Cl.⁵ : **F01D 5/00**, B23P 6/00

(30) Priority : 09.05.91 GB 9110001

(43) Date of publication of application :
**11.11.92 Bulletin 92/46**

(84) Designated Contracting States :
**AT BE CH DE DK ES FR GB GR IT LI LU NL PT SE**

(71) Applicant : **TURBINE BLADING LIMITED**
**George Baylis Road**
**Droitwich, Worcestershire WR9 9AB (GB)**

(72) Inventor : **Fraser, Michael James**
**Badgeworth Manor, Badgeworth**
**Cheltenham, Gloucestershire GL51 5UL (GB)**

(74) Representative : **Leach, John Nigel**
**FORRESTER & BOEHMERT**
**Franz-Joseph-Strasse 38**
**W-8000 München 40 (DE)**

(54) **Parts for and methods of repairing turbine blades.**

(57)    A method of repairing a fluid flow machine element comprising the steps of

a) manufacturing an insert having a first part (20) of durable material, a second part (21) of a material the same as or compatible with said machine element (10) so as to be readily attachable thereto and a barrier (22) between said first part (20) and said second part (21) made from a material softer than said first part or said material the same as or compatible with said machine element (10).

b) removing damaged material from said machine element (10) substantially the shape of said insert ; and

c) securing said insert to said machine element (10).

FIG    4

EP 0 512 838 A1

Jouve, 18, rue Saint-Denis, 75001 PARIS

The present invention relates to parts for and methods of repairing fluid flow machines and primarily but not exclusively is concerned with high velocity fluid flow machinery such as turbines and in particular turbine blades, nozzles, buckets and similar parts all hereinafter referred to for convenience as machine elements.

Turbine blades in particular are subject to wear during use and in the case of steam turbines the outer ends of the turbine blades in a rotor assembly are the parts which have the greatest linear speed in use and the leading edge of the outer end is that part which is most prone to erosion.

Sometimes turbine blades are formed with an insert or shield of a hard material such as Stellite to combat the erosion which is likely to occur in use. However it is not unknown for such inserts or shields to become detached from the blade and repair is then necessary. Problems can also occur even if the insert or shield does not become detached since cracks which may form in the shield or insert may be transmitted to the parent material of the blade.

It has been proposed in GB-A-2198667, to repair a turbine blade by securing an insert having a first part made of a durable material, and a second part made from a material substantially the same as that from which the blade is made to the blade by using a cushioning material such as Inconel.

Whereas such a repair method has been found to be highly satisfactory there are occasions when such a method of repair does not provide all the necessary requirements.

In the case of a turbine blade where the damage is severe a large amount of repair work may be necessary. This may be carried out by a repair technique of building up the eroded part of the blade by successive passes or an insert manufactured in accordance with the aforementioned patent application may be provided. The former of the repair techniques is in many cases unsatisfactory since the intense heat generated during the successive weld passes causes severe distortion to the blade which may result in the blade being left with residual stress which can cause early failure of the blade. Furthermore the weld material might have undesired porosity which particularly in the case of a steam turbine once again leads to early failure of the blade due to the ingress of moisture. The insert as proposed in GB-A-2198667 may well act in a satisfactory manner to prevent the propagation of cracks which might occur in use from the insert to the parent material of the blade but the crack in the insert itself may be sufficient to deleteriously affect the functioning of the blade and the turbine as a whole and thus be unsatisfactory. It is an object of the present invention therefore to provide a repair that overcomes or reduces the above mentioned problems.

According to one aspect of the present invention we provide a method of repairing a fluid flow machine element comprising the steps of

a) manufacturing an insert having a first part of durable material, a second part of a material the same as or compatible with said machine element so as to be readily attachable thereto and a barrier between said first part and said second part made from a material softer than said first part or said material the same as or compatible with said machine element;

b) removing damaged material from said machine element substantially to the shape of said insert; and

c) securing said insert to said machine element.

Preferably said insert is secured to the machine element with material the same as or similar to the material by means of which said first part is secured to the second part of the insert.

Preferably the barrier is made from a material comprising Inconel.

Preferably said durable material is selected from the group comprising Stellite, tool steel, high carbon steel, hardened parent metal, diffusion alloy hardened material.

The machine element may comprise a turbine blade, stator, bucket or nozzle.

The machine element may have the insert secured thereto by a welding or brazing operation.

The method of repair may comprise heating of the machine element which heating may be performed during:

a) a period prior to said welding or brazing operation;

b) the welding or brazing operation;

c) a period after said welding or brazing operation.

The insert may be subjected to a heat treatment operation prior to connection to said machine element. The heat treatment operation may comprise a hardening operation and/or a stress relief operation.

The insert may be connected to the machine element by a soft material such as Inconel and the temperature necessary to effect the welding operation may be sufficiently low to prevent any significant heat treatment processes being subsequently necessary to stress relieve the machine part.

Preferably said insert is tested prior to securing to the machine parts so that the properties thereof are known and testing may include the testing of hardness values and/or X-raying so that when the insert is used to repair a machine part evidence can be provided that there are no defects in the insert itself.

The insert of the present invention has several unexpected benefits. The majority of the insert may comprise material the same as or compatible with the material of the blade which may well be an inexpensive material compared with the durable material for example Stellite. The durable material is situated solely in the area of the most wear and may comprise a relatively small part of the insert as a whole. Furthermore a soft cushioning barrier is provided between the durable part and the second part of the insert e.g. 12% chrome steel so that during subsequent use of the blade any crack which may occur during use, for example, following impact with a hard article will not be transmitted either to the second part of the insert or to the parent material of the machine element. Furthermore the soft barrier between the durable first part and the second part will prevent or minimise the deleterious effects to the connection of one part to the other when the insert is secured, for example by welding, to the machine element itself.

Unlike the conventional method of repair in which many weld passes are carried out to build up a turbine blade with weld material the heat input to a blade using an insert of the present invention will be minimal since it may require only a single part on either side of the blade to properly secure the insert to the blade itself, the temperature to which the blade is subjected is therefore considerably decreased and the likelihood of distortion occurring to the blade is accordingly decreased.

It is another object of the present invention to provide an insert to enable repair in accordance with the above mentioned method of repair.

According to a further aspect of the invention we provide an insert for securing to or secured to a machine element, said insert having a first part of a durable material, a second part of a material the same as or compatible with the material of the machine element to which it is to be secured, and said first part being secured to said second part by a relatively soft material.

The machine element may be a turbine blade and the first part may be of a material of high durability.

The relatively soft material may provide a barrier between the first and second parts.

The first part may be made from a material from the group comprising Stellite, tool steel, high carbon steel, hardened parent metal and diffusion alloy hardened material.

The second part may comprise a chrome steel.

The relatively soft material may comprise a weld material such as Inconel.

Two examples of insert and a method of repair incorporating one of the inserts will now be described by way of example only with reference to the accompanying drawings wherein:-

FIGURE 1 illustrates a turbine blade having erosion on the leading edge thereof,

FIGURE 2 is the turbine blade shown in Figure 1 with a piece having been removed,

FIGURE 3 shows the turbine blade as shown in Figures 1 and 2 having had a insert in accordance with the present invention secured thereto,

FIGURE 4 is a cross section of the blade along the line 4-4 in Figure 3,

FIGURE 5 illustrates an alternative embodiment of insert,

FIGURE 6 is a cross sectional view of the insert along the line 6-6 shown in Figure 5, and

FIGURE 7 illustrates a turbine nozzle having a part removed ready to accept a coupon as shown in Figures 5 and 6.

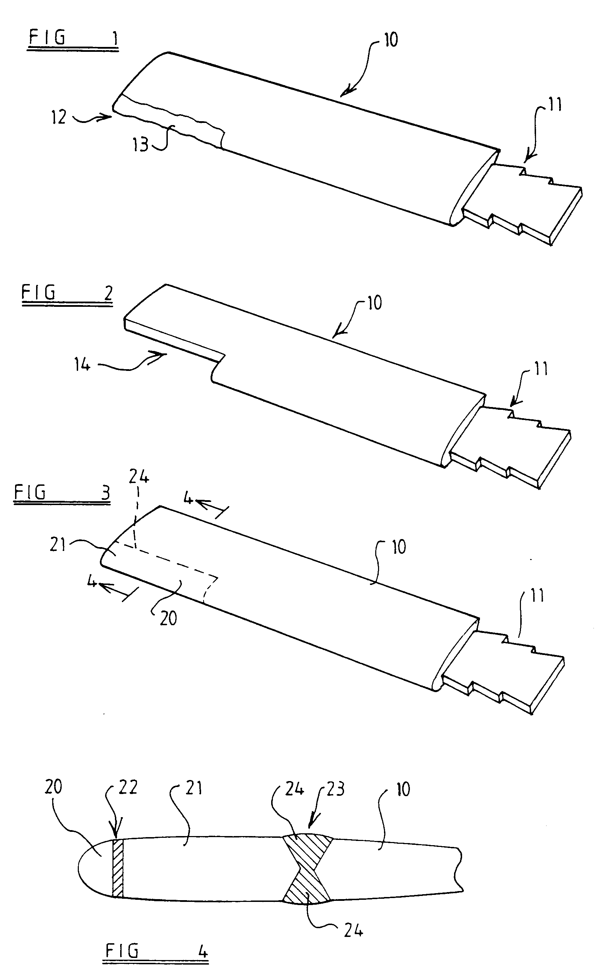

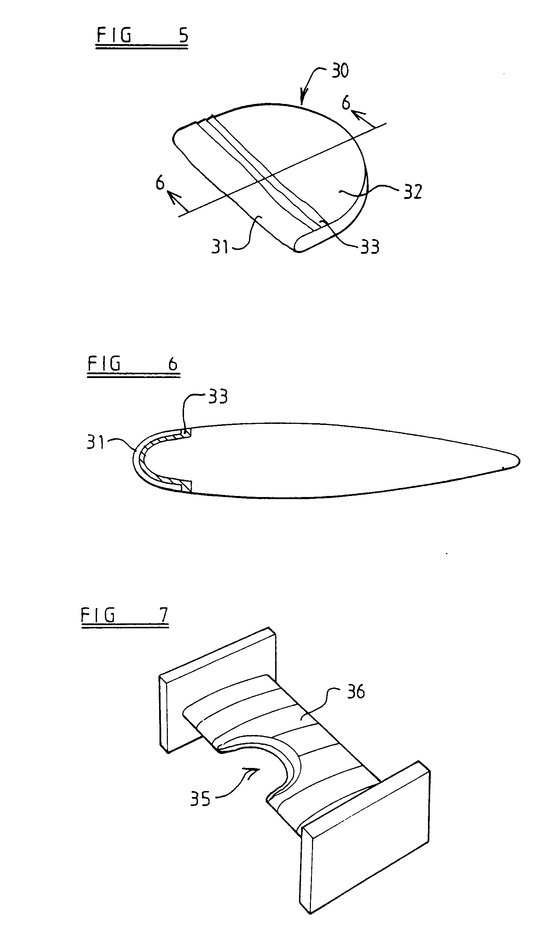

Referring first to Figure 1 a turbine blade is shown at 10 having a root part 11 by means of which it is secured to a rotor and a leading edge 12 damage to which is shown at 13. In order to carry out the method of repair of the present invention all damaged material is removed, for example, by machining so as to produce a cut-out as indicated at 14 in Figure 2. An insert according to the present invention is then secured to the blade 10 and the nature of the insert will be described with additional reference to Figures 3 and 4.

The insert 21 shown in cross-section in Figure 4 comprises a first or nose part 20 which will form the leading edge of the turbine blade and is made from a durable hard material. In the present example the durable material is Stellite but other durable material may be used such as high carbon steel, tool steel, or hardened parent metal, diffusion alloy hardened steel, or a plasma coated steel, as described, for example, in GB-A-2227190, GB-A-2229944, GB-B-2198667 or GB-A-2244943 respectively.

The nose part 20 is secured to a second, major, part 21 of the insert which may be made from a material which is the same as the turbine blade 10, for example, 12% of chromium steel. If desired, the second part 21 may be made of other material than the material of the turbine blade but having properties which are compatible with, or the same as, the material of the turbine blade. The nose part 20 is secured to the second part 21 of the insert by a relatively soft weld material which may, for example, comprise Inconel.

The material of which the nose part 20 is made, as described above, generally requires heat treatment to attain the desired properties and according to the present invention the insert may be manufactured and subjected to necessary heat treatment and/or subjected to any other treatment and may be tested to ensure that it is free from flaws prior to securing the insert to the blade 10.

The insert is shaped, as shown in Figure 4, so as to co-operate with the shaped cut-out of the blade 10 to form a diablo shape indicated at 23 which is filled with weld material 24 which, in the present example, comprises Inconel or other soft weld material having properties compatible with or the same as the material of the blade. Alternatively the insert may be secured to the blade 10 by brazing. The blade 10 is thus insulated by the soft material 24 from the second part 21 of the insert which is itself insulated from the durable first or nose part 20 by the Inconel layer 22.

The nose part 20 which as aforementioned may have been subjected to heat-treatment prior to securing to the blade 10 is sufficiently distanced from the weld area 23 to prevent excessive heat being transmitted to the nose part 20 during welding and the flexibility of the Inconel barrier 22 will adequately cope with different coefficients of thermal expansion between the nose part 20 and the material of the second part 21.

Referring now in addition to Figures 5 and 6 an alternative insert is shown, the insert being in the form of a coupon which is intended to be secured to for example, a turbine nozzle 36 and a cut-out as shown in Figure 7 is provided in a damaged nozzle of the same size as the coupon so that the coupon may be secured thereto by welding in a manner similar to that described with reference to Figure 4.

Figure 5 illustrates a coupon 30 having a nose part 31 made of durable hard material. In the present example the durable material is Stellite but other durable material may be used such as the high carbon steel, tool steel, hardened parent metal or diffusion alloy or plasma hardened steel as described hereinbefore with reference to the first embodiment. The nose part 31 is secured to a second part 32 made from a material which is the same as the machine element to which it is secured. If desired, the second part 32 may be made of other material than the material of the machine element but which has properties compatible with or the same as the parent metal of the machine element. The first part 31 is secured to the second part 32 by a relatively soft weld material 33 which may, for example, comprise Inconel. As in the case of the first embodiment the coupon may be manufactured and subjected to heat treatment and/or may be subjected to other treatments and may be tested to ensure that it is free from flaws prior to securement to the nozzle 36.

The coupon 30 is secured to the nozzle 36, shown in Figure 7, in the area 35 where a cut-out has been provided in the area of damage. The coupon is secured to the nozzle 36 by a soft weld material such as Inconel or other soft weld material having properties compatible with or the same as the parent metal of the machine element or by brazing in a similar manner as described hereinbefore with reference to Figures 1 - 4.

Care is to be taken to ensure that there is always a layer of soft weld material between any part of the durable shield 31 and any other part of the coupon 30 and/or nozzle 36.

The repair methods of the present invention enable a repair to be carried out to a fluid flow machine which ensures inclusion of an insert which may be pre-tested and subjected to pre-heat treatment processes in view of the nature of the insert and its manner of connection to the machine part.

As a result of the invention relatively low temperatures are experienced by the first part during welding to the machine element and furthermore because of the cushioning barrier between the first part of the insert and the second part of the insert, which is made from a material compatible with the machine element to which it is to be joined, the first part will not be adversely affected during the welding of the insert to the machine element.

The first part is provided in the area where it is needed but is kept to a minimum hence reducing the cost of the insert as a whole.

Whereas two examples of insert in accordance with the present invention have been described it will be appreciated that they may take any form or shape desired depending on the machine element to be repaired providing the first part is always separated from the second part of the insert by a soft weld material.

The two examples of machine element to be repaired described hereinbefore are the leading edge of a turbine blade and of a nozzle, but the method may be used with any other suitable machine element such as a turbine blade trailing edge or a nozzle trailing edge or a stator or any area where there is relatively high erosion or damage to the machine element.

The method of the present invention enables the insert to be secured to the machine element in situ without even needing to, for example, remove the turbine blades from the rotor of the turbine.

Any necessary stress relief may also be done in situ and, as explained hereinbefore, it does not have a significant effect on the durable material due to the nature of the insert. If desired the machine element may be heated prior to securing of the insert to the machine element.

The treatments to which the inserts may be subjected during manufacture may be of any desired nature since they may be performed under factory conditions and, for example, differential heat treatments may be performed to produce durable material of varying mechanical properties at different locations thereon, for example the hardness may decrease from the leading edge of the nose part towards its trailing edge which is secured to the second part of the insert. Moreover, any necessary stress relief operation may be performed on the insert prior to connection to the machine element.

In this specification reference to material the same as or compatible with the material of the machine element to which it is secured means that the material has at least one of

  a) metallurgical properties which render it capable of being welded or brazed to the machine element;

  b) mechanical properties which render it capable of being attached to the machine element.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1.  A method of repairing a fluid low machine element comprising the steps of
    a) manufacturing an insert having a first part of durable material, a second part of a material the same as or compatible with said machine element so as to be readily attachable thereto and a barrier between said first part and said second part made from a material softer than said first part or said material the same as or compatible with said machine element;
    b) removing damaged material from said machine element substantially to the shape of said insert; and
    c) securing said insert to said machine element.

2.  A method according to Claim 1 wherein said insert is secured to the machine element with material the same as or similar to the material by means of which said first part is secured to the second part of the insert.

3.  A method according to any one of the preceding claims wherein said durable material is selected from the group comprising Stellite, tool steel, high carbon steel, hardened parent metal, diffusion alloy hardened material.

4.  A method according to any one of the preceding claims wherein the machine element comprises a turbine blade, stator, bucket or nozzle.

5.  A method according to any one of the proceeding claims wherein said machine element has the insert secured thereto by a welding or brazing operation.

6.  A method according to any one of the preceding claims wherein the method of repair comprises heating of the machine element which heating may be performed during:
    a) a period prior to said welding or brazing operation;
    b) the welding or brazing operation;
    c) a period after said welding or brazing operation.

7.  A method according to any one of the preceding claims wherein said insert is subjected to a heat treatment operation prior to connection to said machine element.

8.  A method according to any one of the preceding claims wherein said insert is connected to said machine element by soft material.

9.  A method according to Claim 8 wherein the temperature necessary to effect the connecting operation is sufficiently low to avoid any significant heat treatment operation being necessary to stress relieve the machine element.

10. An insert for securing to or secured to a machine element, said insert having a first part of a durable material, a second part of a material the same as or compatible with the material of the machine element to which it is to be secured, and said first part being secured to said second part by a relatively soft material.

11. An insert according to Claim 10 wherein the machine element is a turbine blade and the first part is of a material of high durability.

12. An insert according to Claim 10 or Claim 11 wherein the relatively soft material provides a barrier between the first and second parts.

13. An insert according to any one of Claims 10 to 12 wherein said first part is made from a material from the group comprising Stellite, tool steel, high carbon steel, hardened parent metal and diffusion alloy hardened material and/or the second part comprises a chrome steel, and/or the relatively soft material comprises a weld material such as Inconel.

FIG 1

10

12

13

11

FIG 2

10

14

11

FIG 3

24

4

21

4

20

10

11

20 22 21 24 23 10

FIG 4

FIG 5

FIG 6

FIG 7

EP 0 512 838 A1

European Patent Office

**EUROPEAN SEARCH REPORT**

Application Number

EP 92 30 4130

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | GB-A-2 198 667 (REFURBISHED TURBINE)<br><br>* page 1, line 1 - line 4 *<br>* page 2, line 27 - page 5, line 17 *<br>* page 5, line 33 - page 7, line 13; figures *<br>--- | 1,3-8,<br>10-13 | F01D5/00<br>B23P6/00 |
| D,A | GB-A-2 227 190 (REFURBISHED TURBINE)<br><br>* page 1, line 1 - line 4 *<br>* page 4, line 13 - line 30 *<br>* page 5, line 22 - line 28 *<br>* page 8, line 32 - page 10, line 24; figures *<br><br>----- | 1,3-5,8,<br>10-13 | |
| | | | **TECHNICAL FIELDS SEARCHED (Int. Cl.5)**<br><br>F01D<br>B23P |

The present search report has been drawn up for all claims

| Place of search | Date of completion of the search | Examiner |
|---|---|---|
| THE HAGUE | 29 JULY 1992 | ZIDI K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8